Europäisches Patentamt

European Patent Office

Office européen des brevets

(19)

(11) Numéro de publication: **0 077 729**
**B1**

(12) **FASCICULE DE BREVET EUROPEEN**

(45) Date de publication du fascicule du brevet:
03.07.85

(21) Numéro de dépôt: 82401893.1

(22) Date de dépôt: 15.10.82

(51) Int. Cl.⁴: **F 22 B  1/18,** F 22 B  21/26,
F 28 G  9/00, C 10 J  3/86

(54) **Dispositif d'échange de chaleur pour une installation de gazéification de charbon.**

(30) Priorité: 16.10.81  FR 8119479

(43) Date de publication de la demande:
27.04.83 Bulletin 83/17

(45) Mention de la délivrance du brevet:
03.07.85 Bulletin 85/27

(84) Etats contractants désignés:
BE DE FR NL

(56) Documents cités:
EP - A - 0 024 281
DE - A - 1 924 630
DE - B - 1 751 842
FR - A - 1 222 708
FR - A - 1 442 579
FR - E - 72 160
GB - A - 2 061 758
US - A - 3 398 720

(73) Titulaire: CREUSOT-LOIRE, 42 rue d'Anjou,
F-75008 Paris (FR)

(72) Inventeur: Tillequin, Jean, 15 Square de Clignancourt,
F-75018 Paris (FR)

(74) Mandataire: Mongrédien, André et al, c/o
BREVATOME 25, rue de Ponthieu, F-75008 Paris (FR)

ACTORUM AG

## Description

La présente invention se rapporte à un dispositif d'échange de chaleur permettant de récupérer la chaleur du gaz chargé en poussières produit dans une installation de gazéification de combustible solide, notamment de charbon, pour donner de la vapeur d'eau.

On connaît des installations de gazéification de charbon dans lesquelles le charbon, broyé finement, est envoyé avec de l'oxygène dans un réacteur de gazéification où ils produisent un gaz chargé de cendres fondues. D'après le GB-A N° 2061758, le gaz produit par le réacteur entre dans une chaudière de récupération de chaleur présentant des éléments d'échange de chaleur produisant de la vapeur d'eau.

Le EP-A N° 0024281 décrit une installation de gazéification de charbon où le gaz chargé en poussières produit par le réacteur, après avoir traversé une chaudière à rayonnement pourvue d'au moins un faisceau de tubes associé à un réservoir d'eau et de vapeur est conduit à un échangeur de chaleur dans l'enceinte duquel est logé un faisceau de tubes économiseur. Cette installation ne produit pas de vapeur surchauffée.

Le FR-A N° 1442579 décrit une chaudière à circulation forcée dans laquelle l'eau alimente des tubes hélicoïdaux de réchauffage, de vaporisation et de surchauffe.

La présente invention a pour but de fournir, pour une installation du type du EP-A N° 0024281, une chaudière produisant de la vapeur surchauffée et comportant deux faisceaux reliés à un réservoir d'eau et de vapeur, l'échangeur situé en aval de la chaudière à rayonnement comportant un économiseur et un surchauffeur. L'invention a également pour but de faciliter le supportage et le démontage de l'économiseur et du surchauffeur.

Selon une caractéristique de l'invention, le faisceau économiseur est raccordé au réservoir et l'échangeur contient un faisceau surchauffeur alimenté en vapeur par le réservoir, les deux faisceaux étant constitués chacun d'une pluralité d'enroulements hélicoïdaux agencés de manière à former des espaces annulaires entre lesquels des dispositifs de ramonage projettent des jets de fluide de nettoyage.

Selon une autre caractéristique, le dispositif comporte deux tubes collecteurs qui passent au centre dudit économiseur et dudit surchauffeur en les supportant et qui sont raccordés l'un au surchauffeur, l'autre à l'économiseur de manière à canaliser, en sens opposés, les fluides passant dans ledit économiseur et ledit surchauffeur.

Selon une autre caractéristique, l'extrémité du tube collecteur amont est ancrée à l'enceinte et le tube aval est raccordé à un circuit d'évacuation permettant de compenser la dilatation.

L'invention va maintenant être décrite avec plus de détails en se référant à un mode de réalisation donné à titre d'exemple et représenté par les dessins annexés.

La fig. 1 est une vue schématique de l'installation de gazéification équipée du dispositif d'échange selon l'invention.

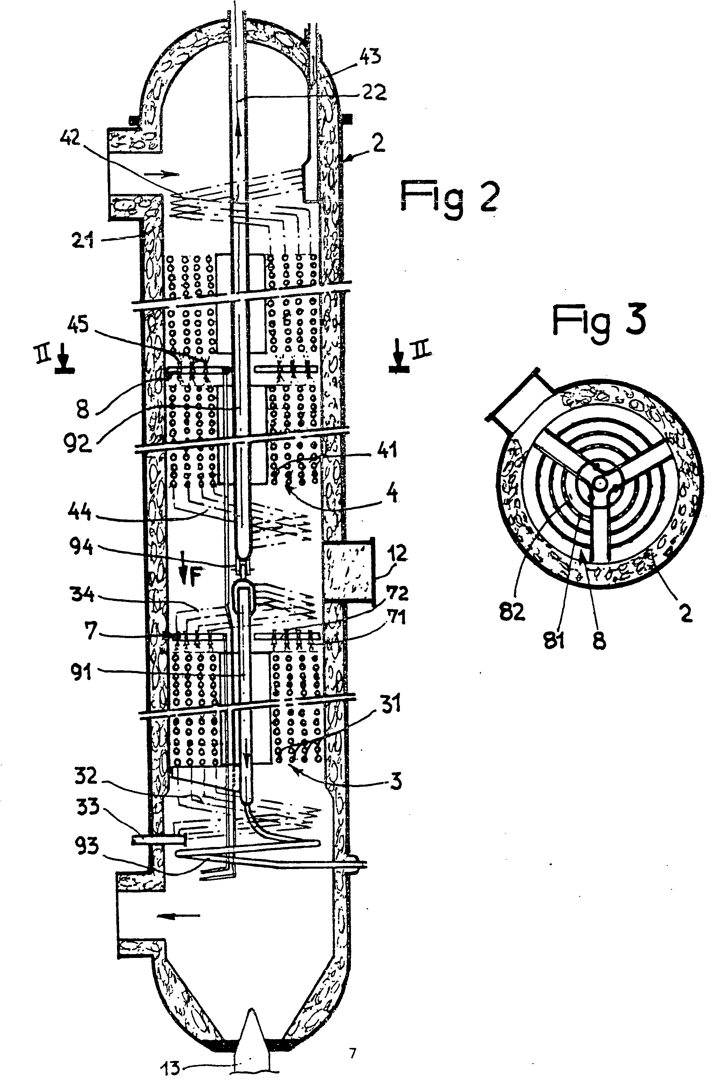

La fig. 2 est une coupe longitudinale de l'échangeur.

La fig. 3 est une coupe selon II-II de la fig. 2.

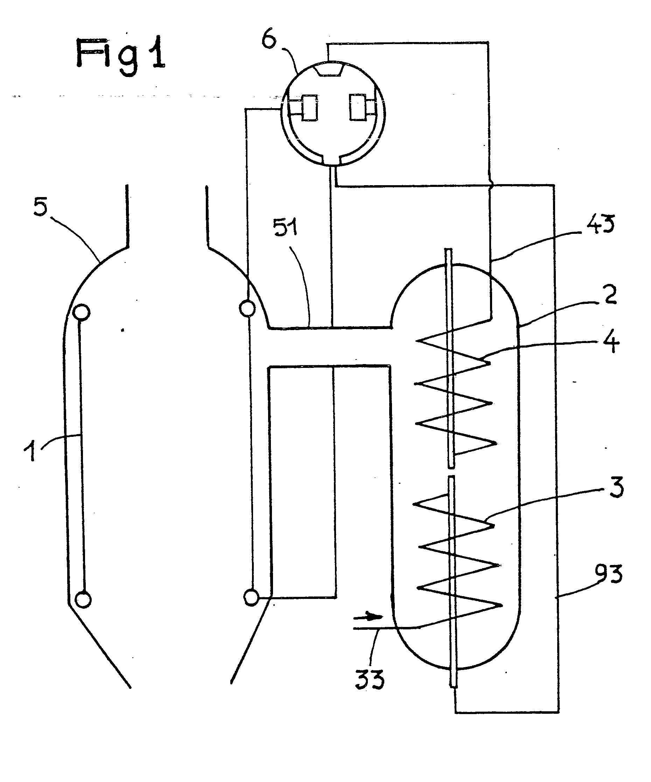

En se reportant à la fig. 1, le dispositif d'échange de chaleur fait partie d'une installation de gazéification comprenant une chaudière de rayonnement 5 qui est montée sous un réacteur de gazéification non représenté et dans laquelle est logé un faisceau de tubes 1 fonctionnant comme faisceau vaporisateur. Les gaz venant du réacteur entrent dans l'enceinte par le haut et s'évacuent par une tuyauterie 51 jusqu'à un échangeur 2 dans lequel sont logés deux faisceaux 3 et 4 jouant respectivement le rôle de faisceau économiseur et le rôle de faisceau surchauffeur.

Les trois faisceaux 1, 3, 4 sont raccordés à un réservoir d'eau et de vapeur 6.

L'échangeur 2 comporte une enceinte métallique 21 ayant une forme de révolution autour d'un axe 22. Cette enceinte garnie intérieurement d'un garnissage réfractaire est pourvue d'une tubulure d'entrée et d'une tubulure de sortie latérales. Le gaz chargé en poussières circule de cet orifice d'entrée à cet orifice de sortie parallèlement à l'axe de révolution de haut en bas selon le sens de la flèche F. L'échangeur est de préférence monté de manière que son axe de révolution 21 soit vertical. Au bas de l'enceinte est ménagée une trappe 13 qui permet l'évacuation des poussières.

Si l'on se réfère au sens F du gaz chargé en poussières, le surchauffeur 4 est logé à la partie supérieure et en amont, et l'économiseur 3 à la partie inférieure et en aval. L'économiseur et le surchauffeur sont constitués chacun de plusieurs faisceaux à convection 31 ou 41 de tubes. Chaque faisceau est formé de plusieurs enroulements hélicoïdaux de tubes ayant un même cylindre d'enroulement dont l'axe est repéré 22. Les spires entre les enroulements d'un même faisceau ne sont pas jointives. Les différents faisceaux de l'économiseur ou du surchauffeur sont emboîtés les uns dans les autres de manière que leurs cylindres d'enroulement respectifs, de diamètres différents, aient le même axe 22. Les faisceaux 31 et 41 de l'économiseur ou du surchauffeur ceinturent des mandrins cylindriques disposés au centre. Les espaces annulaires ménagés autour des mandrins cylindriques, à l'intérieur du garnissage réfractaire, sont occupés par les faisceaux 31 ou 41 et forment le passage d'écoulement du gaz chargé en poussières. Dans l'économiseur ou le surchauffeur, le gaz s'écoule dans chaque espace annulaire ménagé entre deux faisceaux de diamètres différents.

Les différents faisceaux 31 de l'économiseur 3 sont alimentés par des tuyauteries distributrices 32, en hélices ou en serpentins, qui sont raccordées à une tuyauterie commune 33 qui conduit l'eau d'alimentation. Ces tuyauteries distributrices 32 sont situées en aval de l'économiseur. L'eau circule dans les tubes de l'aval vers l'amont, c'est-à-dire en sens inverse de F. Les faisceaux de l'économiseur sont reliés par des tuyauteries collectrices 34, en hélices ou en serpentins, au tube collecteur 91 passant au centre des enroulements. Ces tuyauteries collectrices 34 débouchent dans le tube collecteur 91 en amont du faisceau économiseur de manière que l'eau s'écoule dans ce tube dans le même sens que l'écoulement du gaz. Ce tube 91 est raccordé, en aval, à un circuit d'évacuation 93 qui conduit l'émulsion eau-vapeur au réservoir 6 qui alimente le surchauffeur 4.

Les différents faisceaux 41 du surchauffeur sont raccordés, par l'intermédiaire de tuyauteries distributrices 42 en hélices ou en serpentins, à une tuyauterie commune 43 qui reçoit la vapeur sèche du réservoir 6. Ces tuyauteries distributrices 42 et la tuyauterie commune 43 sont situées en amont du surchauffeur. La vapeur d'eau circule dans le surchauffeur d'amont en aval, suivant F. Les faisceaux du surchauffeur sont reliés par l'intermédiaire de tuyauteries collectrices 44 en hélices ou en serpentins à un tube collecteur 92 passant au centre des enroulements. Ces tuyauteries 44 débouchent dans le tube collecteur 92 qui canalise la vapeur surchauffée, celle-ci s'écoulant dans le tube 92 à contre-courant de l'écoulement du gaz chargé en poussières.

Les deux tubes collecteurs 91 et 92 passent au centre de l'économiseur et du surchauffeur et sont ainsi coaxiaux avec 22. L'extrémité du tube amont 92 est ancrée par une traversée étanche à l'enceinte 2 de manière que les deux tubes 91 et 92 soient suspendus verticalement. Les deux tubes collecteurs 91 et 92 sont séparés de manière que les fluides qu'ils canalisent circulent en sens opposés. Ces deux tubes 91 et 92 sont réunis l'un à l'autre par un accouplement démontable 94. L'opération de démontage de l'accouplement est facilitée par un trou d'homme 12 ménagé sur l'enceinte.

Le surchauffeur est divisé en deux, les faisceaux d'enroulements hélicoïdaux de même diamètre étant raccordés par des tuyauteries 45.

Chaque dispositif de ramonage 7 ou 8 comporte une pluralité de gicleurs 71 ou 81 rangés de manière à former plusieurs cercles concentriques. Chaque ensemble de gicleurs disposés en cercle projette, dans l'espace annulaire compris entre deux faisceaux, des jets de fluide de nettoyage parallèles. Chaque jeu de gicleurs 71 ou 81 rangés en cercle est alimenté par une ou plusieurs tuyauteries d'alimentation 72 ou 82 de formes courbes ou toriques. Les tuyauteries 72 ou 82 s'étendent dans un plan perpendiculaire à l'axe de manière à former plusieurs secteurs. Chaque secteur de tuyauteries 72 ou 82 est alimenté par des tuyauteries radiales qui sont raccordées à une tuyauterie longitudinale passant au travers des mandrins.

Le dispositif de ramonage 7 associé à l'économiseur est monté en amont de cet économiseur. Le dispositif de ramonage 8 associé au surchauffeur est monté entre deux parties de ce surchauffeur et ses tuyauteries d'alimentation 82 sont pourvues de gicleurs donnant des jets opposés qui distribuent le fluide de ramonage sur les deux parties du surchauffeur.

L'économiseur 3 et le surchauffeur 4 sont supportés par les tubes collecteurs 91 et 92 qui les traversent respectivement.

## Revendications

1. Dispositif d'échange de chaleur pour une installation de gazéification de combustible solide, notamment de charbon, dans laquelle le gaz chargé en poussières, après avoir traversé une chaudière à rayonnement (5) pourvue d'au moins un faisceau de tubes associé à un réservoir d'eau et de vapeur (6), est conduit à un échangeur de chaleur (2) dans l'enceinte (21) duquel est logé un faisceau de tubes économiseur (3) alimenté en eau, caractérisé par le fait que le faisceau économiseur (3) est raccordé au réservoir (6) et que l'échangeur (2) contient un faisceau surchauffeur (4) alimenté en vapeur par le réservoir (6), les deux faisceaux (3, 4) étant constitués chacun d'une pluralité d'enroulements (31, 41) hélicoïdaux agencés de manière à former des espaces annulaires entre lesquels des dispositifs de ramonage (8) projettent des jets de fluide de nettoyage.

2. Dispositif selon la revendication 1, caractérisé par le fait qu'il comporte deux tubes collecteurs (91, 92) qui passent au centre dudit économiseur et dudit surchauffeur en les supportant et qui sont raccordés l'un au surchauffeur, l'autre à l'économiseur de manière à canaliser, en sens opposé, les fluides passant dans ledit économiseur (3) et ledit surchauffeur (4).

3. Dispositif selon la revendication 2, caractérisé par le fait que l'extrémité du tube collecteur amont (92) est ancrée à l'enceinte (21) et que le tube aval (91) est raccordé à un circuit d'évacuation (93) permettant de compenser la dilatation.

4. Dispositif selon la revendication 2 ou 3, caractérisé par le fait que les deux tubes collecteurs centraux (92, 91) sont réunis l'un à l'autre par un accouplement démontable (94).

5. Dispositif selon l'une quelconque des revendications précédentes, caractérisé par le fait que chaque dispositif de ramonage comporte une pluralité de gicleurs (71, 82) rangés de manière à former plusieurs cercles concentriques.

6. Dispositif selon la revendication 5, caractérisé par le fait que le surchauffeur (4) est en deux parties et que le dispositif de ramonage (8) associé est monté entre ces deux parties et comporte des gicleurs donnant des jets opposés.

## Patentansprüche

1. Wärmetauschvorrichtung für eine Festbrennstoff-Vergasungsanlage, insbesondere für Kohle, in welcher das staubhaltige Gas nach dessen Durchströmung durch einen Strahlungskessel (5) mit mindestens einem an einen Wasser- und Dampfbehälter (6) angeschlossenen Rohrbündel einem Wärmetauscher (2) zugeführt wird, wobei in dessen Ummantelung (21) ein mit Wasser versorgtes Vorwärm-Rohrbündel (3) untergebracht ist, dadurch gekennzeichnet, dass das Vorwärm-Rohrbündel an einem Behälter(6) angeschlossen ist, und dass in dem Wärmetauscher (2) ein durch den Behälter (6) mit Dampf versorgtes Überhitzrohrbündel (4) untergebracht ist, wobei die beiden Rohrbündel (3 bzw. 4) jeweils aus einer Vielzahl Spiral-Rohrschlangen (31, 41) bestehen, die derart angeordnet sind, dass kreisförmige Zwischenräume zum Einspritzen der Säuberungsflüssigkeit durch die Reinigungsvorrichtungen (8) gebildet werden.

2. Vorrichtung nach Anspruch 1, dadurch gekennzeichnet, dass sie zwei Sammelrohre (91, 92) aufweist, die in der Mitte den Vorwärmer und den Überhitzer abstützend durchqueren, wobei das eine an dem Überhitzer und das andere an dem Vorwärmer derart angeschlossen ist, dass sie die durch diesen Vorwärmer (3) und diesen Überhitzer (4) fliessende Medien in entgegengesetzter Richtung durchschleusen.

3. Vorrichtung nach Anspruch 2, dadurch gekennzeichnet, dass das vordere Sammelrohr (92) mit seinem Ende an der Ummantelung (21) verankert ist, und dass das hintere Rohr (91) an einem Abflusskreis (93) zur Dehnungskompensation angeschlossen ist.

4. Vorrichtung nach Anspruch 2 oder 3, dadurch gekennzeichnet, dass die beiden mittigen Sammelrohre (91, 92) über eine abnehmbare Kupplung (94) verbunden sind.

5. Vorrichtung nach einem der vorhergehenden Ansprüche, dadurch gekennzeichnet, dass jede Reinigungsvorrichtung eine Vielzahl von in mehreren konzentrischen Kreisen angeordneten Düsen (71, 81) umfasst.

6. Vorrichtung nach Anspruch 5, dadurch gekennzeichnet, dass der Überhitzer (4) aus zwei Teilen besteht, und dass die zugehörige Reinigungsvorrichtung (8) zwischen diesen beiden Teilen angeordnet ist und entgegengesetzt spritzende Düsen aufweist.

## Claims

1. Heat exchange device for a solid-fuel, particularly coal, gasification plant in which the dust-laden gas, after having passed through a radiation boiler (5) equipped with at least one tube bundle associated with a water and steam tank (6) is led to a heat exchanger (2) within the enclosure (21) of which is placed an economizer tube bundle (3) supplied with water, characterised in that the economizer bundle (3) is connected to the tank (6) and the exchanger (2) contains a superheater bundle (4) supplied with steam by the tank (6), each of the two bundles (3 and 4) consisting of a plurality of helical windings (31, 41) arranged so as to form annular spaces between which devices for boiler-tube cleaning (8) project jets of cleaning fluid.

2. Device according to Claim 1, characterised in that it incorporates two collector tubes (91, 92) which pass in the centre of the said economizer and of the said superheater, while supporting them, and which are connected one to the superheater and the other to the economizer so as to channel, in opposite directions, the fluids passing through the said economizer (3) and the said superheater (4).

3. Device according to Claim 2, characterised in that the end of the upstream collector tube (92) is anchored to the enclosure (21) and the downstream tube (91) is connected to a discharge circuit (93) permitting the expansion to be compensated.

4. Device according to Claim 2 or 3, characterised in that the two central collector tubes (92, 91) are joined together by a demountable coupling (94).

5. Device according to any one of the preceding claims, characterised in that each boiler-tube cleaning device incorporates a plurality of nozzles (71, 81) aligned so as to form several concentric circles.

6. Device according to Claim 5, characterised in that the superheater (4) is in two parts and the associated boiler-tube cleaning device (8) is fitted between these two parts and incorporates nozzles giving opposed jets.

Fig 1

0 077 729

Fig 2

Fig 3